# EUROPEAN PATENT SPECIFICATION

(11) **EP 3 791 993 B1**
(45) Date of publication and mention of the grant of the patent: **16.07.2025**
(21) Application number: 19800293.3
(22) Date of filing: 13.05.2019
(51) Int. Cl.: B23K 26/352, B23K 26/00, B29C 65/48, B32B 15/08, B32B 1/00, B32B 15/16

(54) **COMPOSITE AND METHOD FOR MANUFACTURING COMPOSITE**
VERBUNDSTOFF UND VERFAHREN ZUR HERSTELLUNG EINES VERBUNDSTOFFS
COMPOSITE ET PROCÉDÉ DE FABRICATION DE COMPOSITE

(30) Priority: 11.05.2018 JP 2018092176; 30.11.2018 JP 2018224951
(43) Date of publication of application: 17.03.2021
(73) Proprietor: Daicel Miraizu Ltd., Tokyo 108-8231 (JP)
(72) Inventor: ITAKURA Masahiko, Tokyo 108-8231 (JP); SHIMIZU Kiyoshi, Tokyo 108-8231 (JP); UNO Takayuki, Tokyo 108-8231 (JP); KATAYAMA Masahiro, Tokyo 108-8231 (JP)
(74) Representative: Grünecker Patent- und Rechtsanwälte PartG mbB
(86) International application number: PCT/JP2019/018875
(87) International publication number: WO 2019/216439

(56) References cited:
- WO-A1-2015/008771
- WO-A1-2018/043637
- WO-A1-2019/216440
- JP-A- 2015 213 961
- JP-A- 2016 036 884
- JP-A- 2016 107 609
- JP-A- 2016 124 024
- JP-A- 2016 203 643
- JP-B2- 5 959 689

## Description

### Technical Field

The present invention relates to a composite including a composite formed from a metal molded body and an adhesive, and to a method for manufacturing the same.

### Background Art

Inventions for manufacturing a composite molded body are known which includes continuously irradiating a surface of a metal molded body with a continuous-wave laser beam to thereby roughen the surface and form a porous structure, and then bonding it with a resin molded body or other metal molded body via an adhesive layer to thereby manufacture the composite molded body (see JP 5959689 B (Patent Document 1) and JP 5860190 B (Patent Document 2)). The adhesive layer is formed by an adhesive that has penetrated into the surface roughened porous structure section of the metal molded body, and it is thought that more complex pore structure results in increased bonding effect of the adhesive layer, and that for the same pore structures, increased pore depth results in greater bonding strength provided by the adhesive layer.

### Summary of Invention

An object of the present invention is to provide a composite that can obtain higher bonding strength and durability by making the average maximum elevation difference in the pore depths of the porous structure section of the metal molded body be shallower than that of the prior art, and reducing variations in the pore depths (maximum elevation difference in the pore depths).

The present invention provides a composite formed of a metal molded body and an adhesive layer, wherein
the metal molded body has a porous structure section formed in a surface layer part;
the adhesive layer is formed in a portion that includes the porous structure section; and
an average of a maximum elevation difference in the porous structure section of the metal molded body measured according to the method described below is in a range from 30 to 200 µm, and a range of the maximum elevation difference used as a basis for calculating the average maximum elevation difference is within ±40% when the average maximum elevation difference is defined as a reference.

### (Method for Measuring Average Maximum Elevation Difference)

A length range of 500 µm is randomly selected at a maximum of ten locations in a surface area region of 20 mm × 20 mm (if less than 20 mm × 20 mm, then the total surface area region) of the porous structure section of the metal molded body, the maximum elevation difference of pores of a porous structure within the length range of 500 µm at the maximum of ten locations is measured from a cross-sectional SEM image, and an average value of the maximum elevation differences is determined.

The present invention also provides a method for manufacturing the above-mentioned composite, the method including:
continuously irradiating a surface of the metal molded body with laser light at an irradiation rate of 2000 mm/sec or greater using a continuous-wave laser to thereby form a porous structure section in a surface layer part, the following requirements (a) to (d) being satisfied for continuous irradiation with laser light to form the porous structure section; and
applying an adhesive onto the surface of the metal molded body to form an adhesive layer on a portion that includes the porous structure section.

(a) Output from 4 to 250 W
(b) Spot diameter from 20 to 80 µm
(c) Energy density from 1 to 100 MW/cm²
(d) Number of repetitions from 1 to 10

The present invention also provides a composite having an adhesive layer on a bonding surface of a first metal molded body and a second metal molded body, wherein
the first metal molded body has a first porous structure section formed in a surface layer part, and the second metal molded body has a first porous structure section formed in a surface layer part;
the adhesive layer is formed in at least one of a portion that includes the first porous structure section or a portion that includes the second porous structure; and
an average of a maximum elevation difference of the first porous structure section and the second porous structure section of the first metal molded body and the second metal molded body, measured according to the method described below, is in a range from 30 to 200 µm, and a range of the maximum elevation difference used as a basis for calculating the average maximum elevation difference is within ±40% when the average maximum elevation difference is defined as a reference.

### (Method for Measuring Average Maximum Elevation Difference)

A length range of 500 µm is randomly selected at a maximum of ten locations in surface area regions of 20 mm × 20 mm (if less than 20 mm × 20 mm, then the total surface area region) of the first porous structure section and the second porous structure section of the metal molded bodies, the maximum elevation difference of pores of a porous structure within the length range of 500 µm at the maximum of ten locations is measured from a cross-sectional SEM image, and an average value of the maximum elevation differences is determined.

The present invention also provides a method for manufacturing the above-mentioned composite, the method including:
continuously irradiating a surface of the first metal molded body and a surface of the second metal molded body with laser light at an irradiation rate of 2000 mm/sec or greater using a continuous-wave laser to thereby form a first porous structure section and a second porous structure section on respective surface layer parts, the following requirements (a) to (d) being satisfied for continuous irradiation with laser light to form the first and second porous structure sections;
applying an adhesive to at least one of the surface of the first metal molded body or the surface of the first metal molded body surface to form an adhesive layer on at least one of a portion that includes the first porous structure section or a portion that includes the second porous structure section; and
bonding the first metal molded body and the second metal molded body through the adhesive layer.

(a) Output from 4 to 250 W
(b) Spot diameter from 20 to 80 µm
(c) Energy density from 1 to 100 MW/cm²
(d) Number of repetitions from 1 to 10

The bonding strength of the composite of the present invention to other molded bodies can be increased, and durability of the bonding strength including water resistance and moisture resistance can be improved by reducing variation in the maximum elevation difference of the porous structure section formed in the metal molded body.

### Brief Description of Drawings

FIG. 1 is a plan view of a surface roughened metal molded body that serves as an intermediate of the composite of an embodiment of the present invention.
FIG. 2 is a conceptual view illustrating a porous structure at a cross-section between **II-II** in FIG. 1.
FIG. 3 is a plan view of an aluminum plate irradiated with laser light in the Examples and Comparative Example.
FIG. 4 is a diagram for explaining a method for measuring the bonding strength of composites obtained in the Examples and Comparative Example.
FIG. 5 is an SEM image of a partial cross-section in a thickness direction of an aluminum plate (a composite formed of two aluminum plates that are integrated through an adhesive layer) that has been surface roughened to form a porous structure section in Example 1.
FIG. 6 is an SEM image of a partial cross-section in the thickness direction of an aluminum plate (a composite formed of two aluminum plates that are integrated through an adhesive layer) that has been surface roughened to form a porous structure section in Comparative Example 1.
FIG. 7(a) is an SEM image of a partial cross-section in the thickness direction of a composite formed of two aluminum plates integrated through an adhesive layer in Example 3, and FIG. 7(b) is an SEM image of a partial cross-section in the thickness direction of a composite formed of two aluminum plates integrated through an adhesive layer in Comparative Example 1. FIGS. 7(a) and 7(b) are of the same scale.

### Description of Embodiments

### <First Composite>

A composite (first composite) according to an embodiment of the present invention is a composite formed from a metal molded body and an adhesive layer. The first composite serves as a production intermediate of a second composite and a third composite according to an embodiment of the present invention described below.

The metal molded body of the first composite has a porous structure section formed in a surface layer part. The metal that can be used in the metal molded body is not particularly limited, and can be appropriately selected according to the application. For example, the metal thereof can be selected from iron, various stainless steels, aluminum, zinc, titanium, copper, brass, chrome plated steel, magnesium and alloys containing these (except stainless steel), and cermets such as tungsten carbide and chromium carbide. These metals can be subjected to surface treatments such as an alumite treatment or a plating treatment.

The shape and size of the metal molded body can be set according to the application. The porous structure section of the metal molded body has the same cross-sectional structure as that of the surface layer section after surface roughening as described in the inventions of Patent Documents 1 and 2, and includes: stem pores having openings and formed in a thickness direction, opened pores made from branch pores formed in a direction different from that of the stem pores from an inner wall surface of the stem pores, and an internal space formed in the thickness direction and having no opening. The porous structure section also has a tunnel connection path connecting the opened pores to the internal space, and a tunnel connection path connecting the opened pores one another.

With the composite according to an embodiment of the present invention, the average maximum elevation difference of the porous structure section from the surface of the metal molded body, as measured by the below-described method, is in a range from 30 to 200 µm, and the range of the maximum elevation difference used as a basis for calculating the average maximum elevation difference is within ±40% when the average maximum elevation difference is defined as a reference.

### (Method for Measuring Average Maximum Elevation Difference)

A length range of 500 µm is randomly selected at a maximum of ten locations in a surface area region of 20 mm × 20 mm (if less than 20 mm × 20 mm, then the total surface area region) of the porous structure section of the metal molded body, the maximum elevation difference of pores of a porous structure within the length range of 500 µm at the maximum of ten locations is measured from a cross-sectional SEM image, and an average value of the maximum elevation differences is determined.

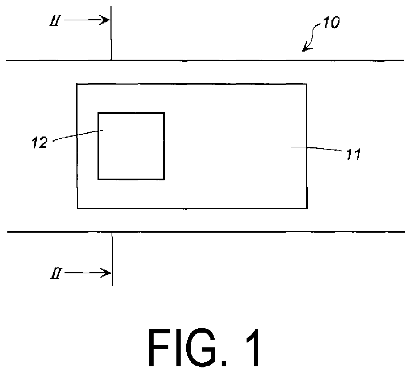

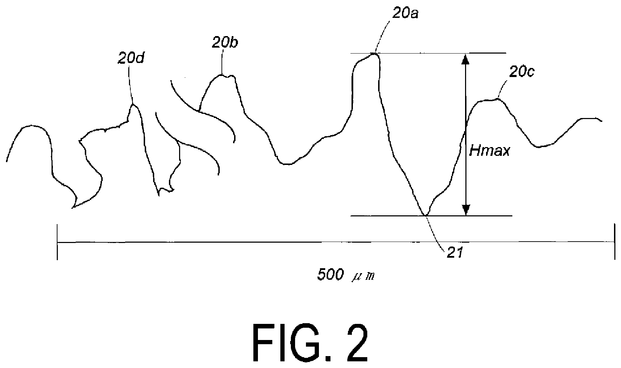

The above-mentioned method for measuring the average maximum elevation difference is described with reference to FIGS. 1 and 2. FIG. 1 illustrates a state in which a portion of the surface of a metal molded body 10 is roughened to form a porous structure section 11. It may be assumed that the cross-sectional structure of surface roughened porous structure section 11 is substantially the same if the surface roughening conditions are constant, and that there are no differences due to the position of the porous structure section 11. Thus, a surface area region (measurement surface area region) 12 of 20 mm × 20 mm is optionally selected from amongst the entire porous structure section 11, and images of cross-sectional structures in the measurement surface area region are captured at ten locations using a scanning electron microscope (SEM).

While FIG. 2 illustrates a porous structure section, this figure is for describing the measurement method and does not illustrate a specific aspect of the porous structure section described above. For each of the SEM images captured at ten locations, an elevation difference (Hmax) between a highest peak portion 20a and a lowest portion (bottom portion) 21 is measured for a length range of 500 µm length as illustrated in FIG. 2, and then the Hmax average value (average maximum elevation difference) of the ten locations is determined. The highest peak portion 20a and other peak portions 20b to 20d indicate a state in which the metal molded body 10 melts and bulges. Note that the thickness of the surface layer part in an embodiment according to the present invention is the distance from the highest peak portion 20a to the bottom 21 of the deepest pore in FIG. 2, and therefore the thickness of the surface layer part is the same as the maximum elevation difference Hmax.

If the roughened surface area is less than 20 mm × 20 mm, the entire roughened surface area is measured. If the roughened surface area is less than 20 mm × 20 mm and the measurement at ten very narrow locations is difficult, the measurement is implemented at from 1 to 9 locations. Even if the roughened surface area is extremely large, it is thought that as long as the surface roughening conditions are the same, there is no difference in the structure of the porous structure section, and therefore measurements can be implemented on any single 20 mm × 20 mm surface area region (measurement surface area region), and as necessary, two to five 20 mm × 20 mm surface area regions (measurement surface area regions) can be optionally selected and measured.

The average maximum elevation difference of the porous structure section 11 of the metal molded body 10 is in a range from 30 µm to 200 µm, preferably in a range from 40 µm to 150 µm, more preferably from 60 µm to 125 µm, and even more preferably from 70 µm to 100 µm.

The maximum elevation difference that is the basis for calculating the average maximum elevation difference is within a range of ±40% when the average maximum elevation difference is defined as a reference (when the average maximum elevation difference is 100 µm, the range of the maximum elevation difference is from 60 µm to 140 µm), and is preferably within a range of ±35%, and more preferably within a range of ±32%.

As illustrated in FIG. 1, the adhesive layer of the first composite is formed to cover at least the surface (peaks 20a to 20d) of the metal molded body 10 that includes the porous structure section 11, and to correspond to the recessed and protruding shape of the porous structure section 11. The adhesive layer may be formed as far as the surface of the metal molded body 10 outside the porous structure section 11 (the surface on which the porous structure section 11 is not formed).

The adhesive layer is in a state in which micro recesses and protrusions are formed, the micro recesses and protrusions corresponding to recesses and protrusions on the surface of the metal molded body 10 on which the porous structure section 11 is present, and preferably, the thickness of the adhesive layer is as uniform as possible, but a partially non-uniform thickness portion may be present. The thickness of the adhesive layer is preferably in the same range as the range of the average maximum elevation difference of the porous structure section 11 of the metal molded body 10 described above. The thickness of the adhesive layer and the average maximum elevation difference of the porous structure section 11 of the metal molded body 10 preferably have an upper limit of 200 µm or less because with such upper limit, the bonding force can be increased by uniformly maintaining the thickness of the adhesive layer at the bonding surface (adhering surface) between the first composite and another molded body when the first composite is bonded to the other molded body through the adhesive layer of the first composite, and durability is improved by preventing air bubbles from entering into the adhesive layer. When the lower limit of the thickness of the adhesive layer and the average maximum elevation difference of the porous structure section 11 of the metal molded body 10 is 30 µm or greater, the bonding force when the first composite is bonded to the other molded body through the adhesive layer of the first composite can be increased.

The adhesive that forms the adhesive layer is not particularly limited, and known adhesives such as thermoplastic resin-based adhesives, thermosetting resin-based adhesives, and rubber-based adhesives, as well as moisture-curable adhesives can be used.

Examples of thermoplastic resin-based adhesives include polyvinyl acetates, polyvinyl alcohols, polyvinyl formals, polyvinyl butyrals, acrylic adhesives, polyethylene, chlorinated polyethylene, ethylene-vinyl acetate copolymers, ethylene-vinyl alcohol copolymers, ethylene-ethyl acrylate copolymers, ethylene-acrylic acid copolymers, ionomers, chlorinated polypropylenes, polystyrenes, polyvinyl chlorides, plastisols, vinyl chloride-vinyl acetate copolymers, polyvinyl ethers, polyvinylpyrrolidone, polyamides, nylons, saturated amorphous polyesters, and cellulose derivatives.

Examples of thermosetting resin-based adhesives include urea resins, melamine resins, phenolic resins, resorcinol resins, epoxy resins, polyurethanes, and vinyl urethanes.

Examples of rubber-based adhesives include natural rubbers, synthetic polyisoprenes, polychloroprenes, nitrile rubbers, styrene-butadiene rubbers, styrene-butadiene-vinylpyridine terpolymers, polyisobutylene-butyl rubber, polysulfide rubbers, silicone RTV, rubber chlorides, rubber bromides, kraft rubbers, block copolymers, and liquid rubbers.

Examples of moisture-curable adhesives include cyanoacrylate-based instantaneous adhesives.

### <Second Composite>

A second composite according to an embodiment of the present invention is obtained by integrating the first composite and a non-metal molded body through the adhesive layer of the first composite. As the non-metal molded body, a molded body selected from glass, ceramic, stone, rock, brick, concrete, mortar, resin, rubber, and wood, and a composite molded body formed from two or more types of the above-mentioned molded bodies can be used. In addition, the non-metal molded body may be an existing product made from the various materials described above. A non-metal molded body that has been subjected to a surface roughening treatment on the surface that is bonded with the adhesive layer of the first composite may be used according to the type of material. The surface roughening treatment on the non-metal molded body can be performed by sandblasting, surface roughening using a file, a chemical treatment, or the like depending on the type of material.

### <Third Composite>

A third composite according to an embodiment of the present invention is a composite having an adhesive layer on a bonding surface between the first metal molded body and the second metal molded body.

The third composite may be:
a composite in which a first composite (a composite formed of: a first metal molded body having a first porous structure section, and an adhesive layer) and a second porous structure section of a second metal molded body) are integrated through the adhesive layer of the first composite; or
a composite in which a first composite 1a (a composite formed of: a first metal molded body having a first porous structure section, and an adhesive layer) and a first composite 1b (a composite formed of: a second metal molded body having a second porous structure section, and an adhesive layer) are integrated through their respective adhesive layers.

The first composite 1a and the first composite 1b are both the same as the first composite described above. The first metal molded body and the second metal molded body use molded bodies made from different metals, but molded bodies made from the same metal can be used as necessary. The shape and size, etc. of the first metal molded body and the second metal molded body are not particularly limited and can be selected according to the application.

### <Method for Manufacturing First Composite>

Next, a method for manufacturing the first composite according to an embodiment of the present invention will be described. First, the surface of the metal molded body 10 is continuously irradiated and roughened with laser light at an irradiation rate of 2000 mm/sec or greater using a continuous-wave laser, and thereby a porous structure section is formed in a surface layer part. The method for continuous irradiation of laser light using a continuous-wave laser can be performed in the same manner as the methods described in Patent Documents 1 and 2, but continuous irradiation of laser light is necessary to satisfy the requirements of (a) to (d) below. As a result of this surface roughening treatment, the average maximum elevation difference of the porous structure section from the surface of the metal molded body is in a range from 30 to 200 µm, and the range of the maximum elevation difference used as a basis for calculating the average maximum elevation difference is within ±40% when the average maximum elevation difference is defined as a reference.

### Requirement (a)

The output of the laser is from 4 to 250 W, preferably from 50 to 250 W, more preferably from 100 to 250 W, and even more preferably from 150 to 220 W.

### Requirement (b)

The spot diameter of the laser light is from 20 to 80 µm, preferably from 20 to 50 µm, and more preferably from 20 to 35 µm.

### Requirement (c)

The energy density for irradiation with laser light is from 1 to 100 Mw/cm², preferably from 10 to 80 Mw/cm², and more preferably from 20 to 50 Mw/cm². The energy density for irradiation with laser light is determined from the output (W) of the laser light, and the laser light (spot surface area (cm²) (π·[(spot diameter)/2]²) using the following equation: (Output of Laser Light)/(Spot Surface Area). The requirement (c) is calculated from the requirement (a) and the requirement (b). However, the requirement (c) is important in controlling the surface roughening state of the metal molded body, and therefore, when a portion exists at which the numeric value of the requirement (c) calculated from the numeric range of the requirement (a) and the numeric range of the requirement (b) falls outside the range described above, the numeric range of the above requirement (c) takes priority.

### Requirement (d)

The number of repetitions for irradiation with laser light is from 1 to 10, and preferably from 1 to 8. The number of repetitions for irradiation with laser light is the total number of times of irradiation to form one line (groove) when the laser light is irradiated linearly. When the laser light is to be repeatedly irradiated in a single line, bi-directional irradiation and unidirectional irradiation can be selected. Bi-directional irradiation is a method in which, when a single line (groove) is to be formed, the line (groove) is irradiated from a first end part to a second end part with a continuous-wave laser, after which the line is irradiated from the second end part to the first end part with the continuous-wave laser, and then repeatedly irradiated with the continuous-wave laser from the first end part to the second end part and then from the second end part to the first end part. Unidirectional irradiation is a method of repeatedly irradiating the line (groove) with the continuous-wave laser in one direction from the first end part to the second end part.

The irradiation conditions of the laser light excluding the requirements (a) to (d) are as follows. The irradiation rate of the continuous-wave laser is preferably from 2000 to 20000 mm/sec, more preferably from 5000 to 20000 mm/sec, and even more preferably from 8000 to 20000 mm/sec. When linearly irradiating with the continuous-wave laser light, a spacing (line spacing) between adjacent irradiation lines (grooves formed by adjacent irradiation) is preferably from 0.01 to 0.2 mm, and more preferably from 0.03 to 0.15 mm. All line spacings may be the same, or some or all of the line spacings may be different from one another.

The wavelength is preferably from 300 to 1200 nm, and more preferably from 500 to 1200 nm.

The defocus distance is preferably from -5 to +5 mm, more preferably from -1 to +1 mm, and still more preferably from -0.5 to +0.1 mm. Laser irradiation may be performed with the defocus distance set to a constant value, or may be performed while changing the defocus distance. For example, when laser irradiation is performed, the defocus distance may be set to gradually decrease, or may be set to periodically increase and decrease.

A known continuous-wave laser can be used, and for example, a YVO₄ laser, a fiber laser (preferably a single-mode fiber laser), an excimer laser, a carbon dioxide laser, a UV laser, a YAG laser, a semiconductor laser, a glass laser, a ruby laser, a He-Ne laser, a nitrogen laser, a chelate laser, or a dye laser can be used. Of these, because of the increased energy density, a fiber laser is preferable, and a single-mode fiber laser is particularly preferable.

Next, an adhesive is applied to the porous structure section at which the surface of the metal molded body 10 was roughened in the previous step, and thereby an adhesive layer is formed on the porous structure section, and the first composite is obtained. When a thermosetting resin-based adhesive is used as the adhesive, it is held with an a prepolymer applied thereon. The surface of the adhesive layer is formed with minute recesses and protrusions corresponding to recesses and protrusions on the surface of the porous structure section.

### <Method for Manufacturing Second Composite>

A method for manufacturing the second composite according to an embodiment of the present invention will be described. The first composite is manufactured by the manufacturing method described above. Next, the adhering surface of the non-metal molded body that has been surface roughened as necessary is maintained in a state of being pressed against the adhesive layer of the first composite. When the adhesive layer is formed from a thermoplastic resin-based adhesive, as necessary, the adhesive layer can be heated and adhered in a softened state to the adhering surface of the non-metal molded body. Furthermore, when the adhesive layer is formed from a prepolymer of a thermosetting resin-based adhesive, the prepolymer is heated and cured by leaving it in a heated atmosphere after adhering.

### <Method for Manufacturing Third Composite>

A method for manufacturing the third composite (first embodiment and second embodiment) according to an embodiment of the present invention will be described.

### (First Embodiment)

A first metal molded body and a second metal molded body are each subjected to surface roughening in the same manner as the surface roughening with laser light in the manufacturing method of the first composite, and thereby first and second porous structure sections are formed. Next, an adhesive is applied onto the first porous structure section of the first metal molded body to form an adhesive layer, and thereby a first composite 1a is manufactured. Next, the adhesive layer of the first composite 1a molded body and the porous structure section of the second metal molded body are pressed against each other and adhered and integrated to thereby manufacture a third composite. When the adhesive layer is formed from a thermoplastic resin-based adhesive, as necessary, the adhesive layer can be heated and adhered in a softened state to the adhesive surface of the non-metal molded body. Furthermore, when the adhesive layer is formed from a prepolymer of a thermosetting resin-based adhesive, the prepolymer is heated and cured by leaving it in a heated atmosphere after adhering.

### (Second Embodiment)

A first composite 1a formed from a first metal molded body and an adhesive layer, and a first composite 1b formed from a second metal molded body and an adhesive layer are manufactured in the same manner as the method for manufacturing the first composite. Next, the adhesive layer of the first composite 1a and the adhesive layer of the first composite 1b are pressed together and adhered and integrated to thereby manufacture a third composite. When the adhesive layer is formed from a thermoplastic resin-based adhesive, as necessary, the adhesive layer can be heated and adhered in a softened state to the adhesive surface of the non-metal molded body. Furthermore, when the adhesive layer is formed from a prepolymer of a thermosetting resin-based adhesive, the prepolymer is heated and cured by leaving it in a heated atmosphere after adhering.

The composite and the method for manufacturing the composite according to an embodiment of the present invention also include the preferred embodiments described below.

(1) A metal molded body (metal molded body that has been surface roughened) containing a porous structure section, wherein the average maximum elevation difference of the porous structure section from the surface of the metal molded body as measured by the below-described method is in a range from 30 to 200 µm, and the range of the maximum elevation difference used as a basis for calculating the average maximum elevation difference is within ±40% when the average maximum elevation difference is defined as a reference.

### (Method for Measuring Average Maximum Elevation Difference)

A length range of 500 µm is randomly selected at a maximum of ten locations in a surface area region of 20 mm × 20 mm (if less than 20 mm × 20 mm, then the total surface area region) of the porous structure section of the metal molded body, the maximum elevation difference of pores of a porous structure within the length range of 500 µm at the maximum of ten locations is measured from a cross-sectional SEM image, and an average value of the maximum elevation differences is determined.

(2) A method for manufacturing the metal molded body (metal molded body that has been surface roughened) containing a porous structure section in (1) above.

(3) A composite molded body formed from the metal molded body (metal molded body that has been surface roughened) containing a porous structure section in (1) above and a molded body formed from another material (including on adhesive). The molded body formed from another material is selected from a thermoplastic resin molded body, a thermosetting resin molded body, an electron beam curable resin molded body, an elastomeric molded body, a rubber molded body, and a metal molded body formed from a metal that differs from that of the metal molded body (metal molded body that has been surface roughened) containing the porous structure section.

(4) A method for manufacturing the composite molded body in (3) above.

A composite molded body formed of a metal molded body and a resin molded body can be formed by integrating a resin molded body with a metal molded body (metal molded body that has been surface roughened) containing a porous structure section through, for example, a method described in JP 5774246 B.

As the above-mentioned method for integration, either of the following methods can be used:
a process in which a portion that includes a bonding surface (a surface including the porous structure section) of a metal molded body irradiated with laser light in a previous process is disposed in a mold, and a resin for forming the resin molded body is injection molded; or
a process in which a portion that includes a bonding surface (a surface including the porous structure section) of a metal molded body irradiated with laser light in a previous process is disposed in a mold, and compression molding is implemented with at least the bonding surface (the surface including the porous structure section) and the resin for forming the resin molded body in contact with each other. **In** addition, other known molding methods that are used as methods for molding thermoplastic resins and thermosetting resins can also be applied. When a thermoplastic resin is used, the method is preferably one in which a resin is introduced into a porous structure section (pores, grooves, and/or tunnel connection paths) formed in a metal molded body by applying pressure or the like to the melted resin, and then the resin is cooled and solidified to thereby obtain a composite molded body. In addition to injection molding and compression molding, molding methods such as injection compression molding can also be used.

When a thermosetting resin is used, the molding method is preferably one in which a resin is introduced into a porous structure section (pores, grooves, and/or tunnel connection paths) formed in a metal molded body by applying pressure or the like to a liquid or molten resin (prepolymer), and then the resin is thermally cured to thereby obtain a composite molded body. In addition to injection molding and compression molding, molding methods such as transfer molding can also be used.

When the compression molding method is applied, for example, a method can be used in which a metal molded body is arranged in a state with a bonding surface (a surface including the porous structure section) exposed in the mold frame (state in which the bonding surface is at the front side), and a thermoplastic resin, a thermoplastic elastomer, or a thermosetting resin (provided that the thermosetting resin is a prepolymer) is inserted therein, and then compressed. Note that when a thermosetting resin (prepolymer) is used in an injection molding method and a compression molding method, the resin is thermally cured by heating or the like in a subsequent process.

The composite molded body formed of a metal molded body and a rubber molded body can be obtained using, for example, the following method described in JP 2016-107609 A in which a rubber molded body is integrated with a bonding surface (a surface including a porous structure section) of a metal molded body that has been surface roughened. The method of integrating the metal molded body and the rubber molded body is preferably a press molding method or a transfer molding method.

When the press molding method is applied, a portion including the bonding surface (the surface including the porous structure section) of the metal molded body irradiated with laser light is arranged in a mold, and an uncured rubber for forming the rubber molded body is pressed in a state of being heated and pressurized against the bonding surface (surface including the porous structure section) of the metal molded body, and then cooled, and the product is subsequently removed.

When the transfer molding method is applied, a portion including a bonding surface (a surface including a porous structure section) of a metal molded body irradiated with laser light is arranged in a mold, and an uncured rubber is injection molded inside the mold against the bonding surface (the surface including the porous structure section) of the metal molded body, after which heating and pressurization are performed to integrate the rubber molded body with the bonding surface (the surface including the porous structure section) of the metal molded body, and the integrated product is subsequently cooled, and then removed. Note that, depending on the type of rubber that is used, after the product has been removed from the mold, secondary heating (secondary curing) in an oven or the like can be added to remove primarily residual monomers.

A composite molded body of metal molded bodies made from different metals can be obtained using, for example, the following method described in JP 5860190 B to integrate the metal molded bodies. A first metal molded body having a high melting point and that has been surface roughened is arranged inside a mold with the bonding surface (the surface containing the porous structure section) at the top. Next, for example, a well-known die casting method is applied, and a metal (for example, aluminum, aluminum alloy, copper, magnesium, and alloys including the same) having a melting point that is lower than that of the metal of the first metal molded body (for example, iron or stainless steel) is poured in a molten state into the mold and then cooled.

### Examples

### Examples 1, 2 and 3 and Comparative Example 1

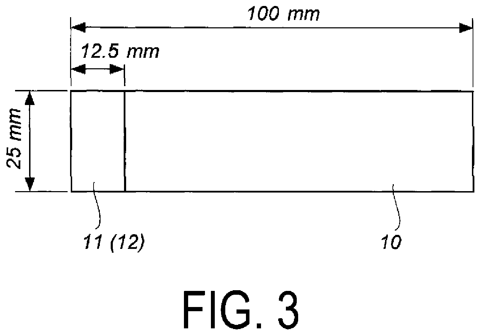

In each example, two aluminum plates (A5025) (length of 100 mm, width of 25 mm, thickness of 3 mm) 10 and a below-described laser device were used, and a surface roughening region (25 mm x 12.5 mm) 12 that would form a porous structure section 11 illustrated in FIG. 3 was continuously irradiated and surface roughened with laser light under the conditions shown in Table 1, and the porous structure section was formed.

### (Laser Device)

Oscillator: IPG-Yb fiber; YLR-300-SM (single mode fiber laser)
Galvano mirror: SQUIREEL (available from ARGES)
Light focusing system 1: fc = 80 mm/fθ = 163 mm
Light focusing system 2: fc = 80 mm/fθ = 100 mm

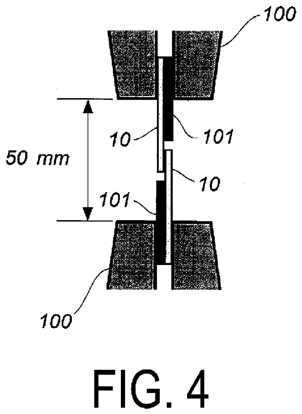

Next, the two aluminum plates 10 of each example were each placed on a hot plate with the surface roughened portion (porous structure section) 11 oriented upward, and preheated (50°C, 15 minutes). Next, an adhesive (EP106NL, one-part epoxy adhesive for industrial use, available from Cemedine Co., Ltd.) was applied, without heating and curing, to the surface roughened section (porous structure section) 11 of the aluminum plate 10, and a first composite according to an embodiment of the present invention was obtained. Next, as illustrated in FIG. 4, in each example, the adhesive application surfaces (adhesive layers of the first composites) of the two aluminum plates 10 were overlapped with each other and fixed using a clip, and then held at 140°C for 1 hour to cure the adhesive, and a third composite was manufactured.

As illustrated in FIG. 4, the shear bonding strength was evaluated through a shearing test using the third composites of Examples 1, 2, and 3 and Comparative Example 1. The shearing test was performed by fixing an adhered object (third composite) of the two aluminum plates using chucks 100 of a tester, with a stainless steel (SUS304) spacer 101 interposed between the chuck 100 and each aluminum plate 10, as illustrated in FIG. 4. Furthermore, the third composites of Examples 1, 2, and 3 and Comparative Example 1 were immersed in 50°C hot water, and at 7 days and 30 days after immersion, shearing tests were performed as illustrated in FIG. 4 to evaluate the shear bonding strength. The results are shown in Table 1.

### (Shearing Test Conditions)

Tester: Tensilon (UCT-1T) available from Orientec Co., Ltd.
Tensile Speed: 5 mm/min
Distance between chucks: 50 mm

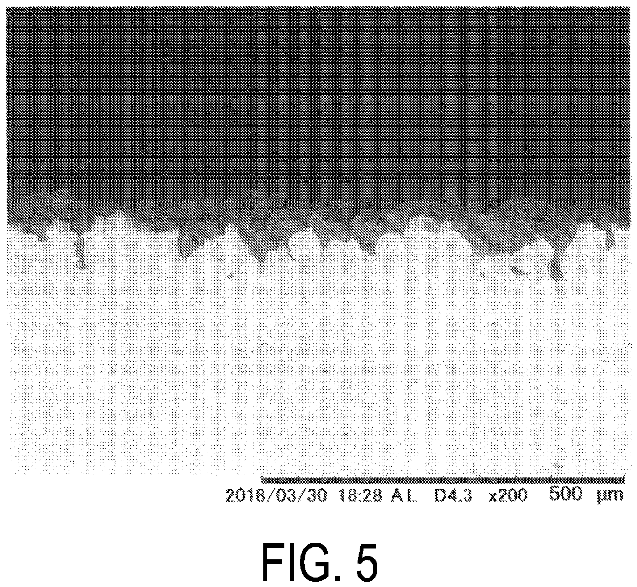

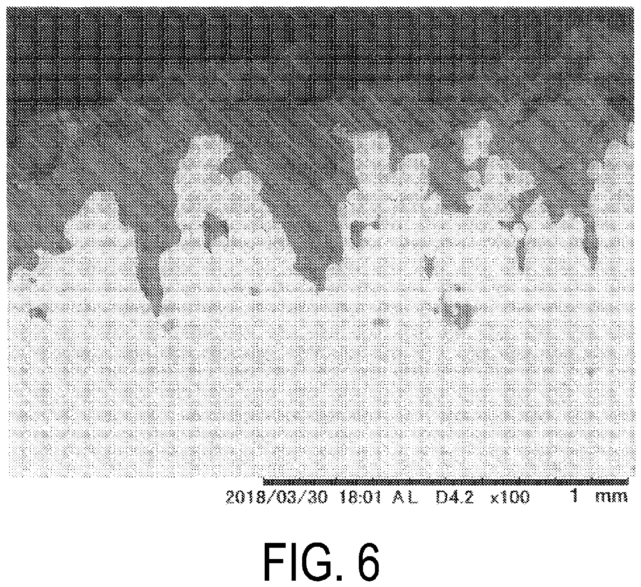

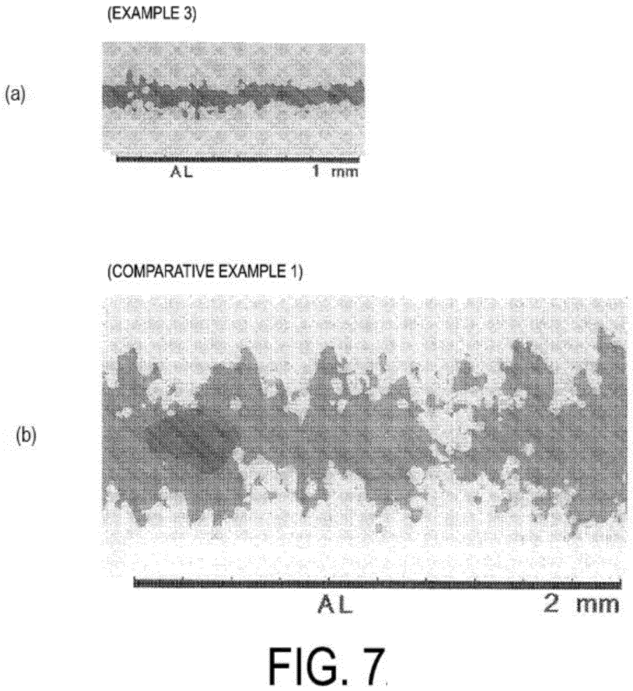

Furthermore, after the test to measure the shear bonding strength, the third composites of Examples 1 to 3 and Comparative Example 1 were cut in a direction perpendicular to the adhering surface of the two aluminum plates 10 using an ultrasonic cutter, and SEM images of the cut surfaces were captured (Example 1 is illustrated in FIG. 5, Comparative Example 1 is illustrated in FIG. 6, and a comparison of Example 3 and Comparative Example 1 is illustrated in FIG. 7). The average maximum elevation differences (average of ten locations) of Examples 1 and 3 and Comparative Example 1 were measured from FIGS. 5, 6, and 7, and the results are shown in Table 1. Furthermore, the ranges of the maximum elevation differences when the average maximum elevation difference is defined as a reference are also shown in Table 1. The SEM image of Example 2 was omitted, but was measured in the same manner.

In both FIG. 5 and FIG. 6, the white portions indicate the porous structure section of the aluminum plate, and the material adhered thereon is the adhesive. FIG. 5 was captured at a magnification of 200 times, and FIG. 6 was captured at a magnification of 100 times, and even from a comparison of FIG. 5 and FIG. 6, differences in the pore depths can be clearly confirmed. However, with the magnification of 200 times in FIG. 6, the difference in pore depth is more pronounced. FIG. 7(a) is an SEM image of the cut surface of Example 3, FIG. 7(b) is an SEM image of the cut surface of Comparative Example 1, and both images are shown at the same scale. Circular to irregularly shaped black portions are observed in both FIGS. 7(a) and 7(b), but it was confirmed that these were air bubbles present in the adhesive layer between the two aluminum plates, and that the air bubbles in Example 3 (FIG. 7(a)) were much smaller than those in Comparative Example 1 (FIG. 7(b)). The results are shown in Table 1.

**[Table 1]**

| | Examples | | | Comparative Example |
|---|---|---|---|---|
| | 1 | 2 | 3 | 1 |
| Metal plate type | A5052 | | | |
| Thickness of metal plate (mm) | 3.0 | | | |
| (a) Output (W) | 193 | 193 | 193 | 292 |
| (b) Spot diameter (µm) | 26.5 | 26.5 | 26.5 | 16.3 |
| (c) Energy density (MW/cm²) | 35 | 35 | 35 | 140 |
| (d) Number of repetitions | 5 | 5 | 3 | 10 |
| Type of light focusing system | 1 | 1 | 1 | 2 |
| Wavelength (nm) | 1069 | | | |
| Irradiation rate (mm/sec) | 10,000 | | | |
| Irradiation form | Bi-directional | | | |
| Number of lines | 40 | | | |
| Line spacing (mm) | 0.05 | | | |
| Treated surface area (mm²) | 312.5 | | | |
| Average maximum elevation difference (µm) | 89 | 91 | 83 | 470 |
| Range of maximum elevation difference (±%) | 25 | 32 | 24 | 45 |
| Shear bonding strength (MPa) | 26.4 | 26.5 | 25.2 | 26.5 |
| Bond strength (MPa) after 50°C hot water immersion (after 7 days) | 25.8 | 25.3 | 24.8 | 23 |
| Bond strength (MPa) after 50°C hot water immersion (after 30 days) | 23.7 | 23 | 23.9 | 18 |

From the common technical knowledge of a person skilled in the art, it is thought that as the pore depth of the porous structure section of the metal molded body used in the third composite increases, the shear bonding strength increases. However, as is clear from a comparison of Examples 1 to 3 and Comparative Example 1, the shear bonding strength was around the same level regardless of the clear difference in the average maximum elevation difference.

Furthermore, from the results of the hot water immersion test, it was confirmed that for the third composites of Examples 1 to 3, the decrease in shear bonding strength was small, and durability including water resistance and moisture resistance was high. Furthermore, the difference between the hot water immersion test results of Examples 1 to 3 and Comparative Example 1 is thought to be resulted from the effect of the size of the air bubbles (the outer diameter of each air bubble and the total volume of the air bubbles) remaining in the adhesive layer as described above. Note that in Examples 1 to 3, it is thought that the reduction in the size of the air bubbles in the adhesive layer in this manner contributes to the smaller average maximum elevation difference of the pore depth and the ease of degassing.

### Example 4

The surface of an aluminum plate was roughened in the same manner as in Example 1 to form a porous structure section. Next, an adhesive (MOS7-200 available from Konishi Co., Ltd.) was applied to a bonding surface (surface with the porous structure section) of the treated aluminum plate, a plate made from GF 60% reinforced PA66 resin (Plastron PA66-GF60-01 (L7): available from Daicel Polymer Ltd.) was bonded thereto, and a composite molded body of an aluminum plate/PA66-GF60-01 (L7) plate was thereby obtained.

### Industrial Applicability

According to the composite and the method for manufacturing the same of the present invention, a composite of a metal molded body and a non-metal molded body, and a composite of metal molded bodies can be obtained. The composite of a metal molded body and a non-metal molded body can be used in applications requiring the properties of both a metal substitute, and the metal molded body and the non-metal molded body. In the case of a metal molded body and another metal molded body, when a composite is formed of metal molded bodies having different properties, the composite can be used as a metal composite having different properties between, for example, one end and another end, or the front and back. A composite of the present invention can be used specifically in, for example, interior parts and exterior parts of automobiles, housings of electronic devices and electrical devices, furniture, construction materials, vases, mirrors, and various daily necessities. In addition, since the composite of the present invention excels in moisture resistance and water resistance of the bonding portion, the composite of the present invention can be used in general applications in which moisture resistance and water resistance are required by selecting the type of metal molded body or non-metal molded body. Examples of applications requiring moisture resistance and water resistance include applications around water (applications of articles used in kitchens, washrooms, and bathrooms, etc.), various applications of components used in water operations, various applications of articles used outdoors, agricultural applications, and applications near, on, or in water (including applications or articles used in ships or in the fishing industry).

### Reference Signs List

10 Metal molded body
11 Surface roughened section (porous structure section)
12 Measurement region
20a to 20d Peak portion of the porous structure section
21 Deepest portion bottom of pores in the porous structure section

## Claims

1. A composite comprising a metal molded body and an adhesive layer, wherein
the metal molded body has a porous structure section formed in a surface layer part;
the adhesive layer is formed in a portion that includes the porous structure section; and
an average of a maximum elevation difference in the porous structure section of the metal molded body measured according to the method described below is in a range from 30 to 200 µm, and a range of the maximum elevation difference used as a basis for calculating the average maximum elevation difference is within ±40% when the average maximum elevation difference is defined as a reference,
method for measuring the average maximum elevation difference:
a length range of 500 µm is randomly selected at a maximum of ten locations in a surface area region of 20 mm × 20 mm (if less than 20 mm × 20 mm, then the total surface area region) of the porous structure section of the metal molded body, the maximum elevation difference of pores of a porous structure within the length range of 500 µm at the maximum of ten locations is measured from a cross-sectional SEM image, and an average value of the maximum elevation differences is determined.

2. The composite according to claim 1, wherein the average maximum elevation difference of the porous structure section of the metal molded body is in a range from 40 to 150 µm, and the range of the maximum elevation difference used as a basis for calculating the average maximum elevation difference is within ±35% when the average maximum elevation difference is defined as a reference.

3. The composite according to claim 1, wherein the average maximum elevation difference of the porous structure section of the metal molded body is in a range from 60 to 125 µm, and the range of the maximum elevation difference used as a basis for calculating the average maximum elevation difference is within ±35% when the average maximum elevation difference is defined as a reference.

4. The composite according to claim 1, wherein the average maximum elevation difference of the porous structure section of the metal molded body is in a range from 70 to 100 µm, and the range of the maximum elevation difference used as a basis for calculating the average maximum elevation difference is within ±35% when the average maximum elevation difference is defined as a reference.

5. A composite comprising a metal molded body and a non-metal molded body, wherein the composite described in any one of claims 1 to 4 and the non-metal molded body are integrated through an adhesive layer of the composite.

6. A composite having an adhesive layer on a bonding surface between a first metal molded body and a second metal molded body, wherein
the first metal molded body has a first porous structure section formed in a surface layer part, and the second metal molded body has a second porous structure section formed in a surface layer part;
the adhesive layer is formed in at least one of a portion that includes the first porous structure section or a portion that includes the second porous structure; and
an average of a maximum elevation difference of each of the first porous structure section of the first metal molded body and the second porous structure section of the second metal molded body, measured according to the method described below, is in a range from 30 to 200 µm, and a range of each maximum elevation difference used as a basis for calculating the average maximum elevation difference is within ±40% when the average maximum elevation difference is defined as a reference,
method for measuring the average maximum Elevation difference:
a length range of 500 µm is randomly selected at a maximum of ten locations in surface area regions of 20 mm × 20 mm (if less than 20 mm × 20 mm, then the total surface area region) of the first porous structure section and the second porous structure section of the metal molded bodies, the maximum elevation difference of pores of a porous structure within the length range of 500 µm at the maximum of ten locations is measured from a cross-sectional SEM image, and an average value of the maximum elevation differences is determined.

7. The composite according to claim 6, wherein the average maximum elevation differences of each of the first porous structure section of the first metal molded body and the second porous structure section of the second metal molded body are in a range from 40 to 150 µm, and the range of the maximum elevation difference used as a basis for calculating the average maximum elevation differences is within ±35% when the average maximum elevation difference is defined as a reference.

8. The composite according to claim 6, wherein the average maximum elevation differences of each of the first porous structure section of the first metal molded body and the second porous structure section of the second metal molded body are in a range from 60 to 125 µm, and the range of the maximum elevation difference used as a basis for calculating the average maximum elevation differences is within ±35% when the average maximum elevation difference is defined as a reference.

9. The composite according to claim 6, wherein the average maximum elevation differences of each of the first porous structure section of the first metal molded body and the second porous structure section of the second metal molded body are in a range from 70 to 100 µm, and the range of the maximum elevation difference used as a basis for calculating the average maximum elevation difference is within ±35% when the average maximum elevation difference is defined as a reference.

10. A method for manufacturing the composite described in claim 1, the method comprising:
continuously irradiating a surface of the metal molded body with laser light at an irradiation rate of 2000 mm/sec or greater using a continuous-wave laser to thereby form a porous structure section in a surface layer part, the following requirements (a) to (d) being satisfied for continuous irradiation with laser light to form the porous structure section; and
applying an adhesive onto the metal molded body surface to form an adhesive layer on a portion that includes the porous structure section:
(a) output is from 4 to 250 W,
(b) spot diameter is from 20 to 80 µm,
(c) energy density is from 1 to 100 MW/cm², and
(d) number of repetitions is from 1 to 10.

11. The method for manufacturing the composite according to claim 10, wherein the requirement (c) is an energy density from 10 to 80 Mw/cm², and the requirement (d) is a number of repetitions from 1 to 8.

12. The method for manufacturing the composite according to claim 10, wherein the requirement (c) is an energy density from 20 to 50 Mw/cm², and the requirement (d) is a number of repetitions from 1 to 8.

13. A method for manufacturing the composite described in claim 5, said composite comprising a metal molded body and a non-metal molded body, and the method comprising:
manufacturing the composite according to the manufacturing method described in claim 10, and then subsequently
bonding the adhesive layer of the composite with the non-metal molded body.

14. A method for manufacturing the composite described in claim 6, the method comprising:
continuously irradiating a surface of the first metal molded body and the surface of the second metal molded body with laser light at an irradiation rate of 2000 mm/sec or greater using a continuous-wave laser to thereby form a first porous structure section and a second porous structure section on respective surface layer parts, the following requirements (a) to (d) being satisfied for continuous irradiation with laser light to form the first and second porous structure sections;
applying an adhesive onto at least one of the first metal molded body surface or the first metal molded body surface to form an adhesive layer on at least one of a portion that includes the first porous structure section or a portion that includes the second porous structure section; and
bonding the first metal molded body and the second metal molded body through the adhesive layer;
(a) output is from 4 to 250 W,
(b) spot diameter is from 20 to 80 µm,
(c) energy density is from 1 to 100 MW/cm², and
(d) number of repetitions is from 1 to 10.

15. The method for manufacturing the composite according to claim 14, wherein the requirement (c) is an energy density from 10 to 80 Mw/cm², and the requirement (d) is a number of repetitions from 1 to 8.

16. The method for manufacturing the composite according to claim 14, wherein the requirement (c) is an energy density from 20 to 50 Mw/cm², and the requirement (d) is a number of repetitions from 1 to 8.

17. The method for manufacturing the composite according to any one of claims 14 to 16, wherein the adhesive is a thermosetting resin-based adhesive, and the method comprises: after bonding the first metal molded body and the second metal molded body through an adhesive layer, heating and curing the thermosetting resin-based adhesive of the adhesive layer.

## Patentansprüche

1. Verbundwerkstoff, umfassend einen Metallformkörper und eine Klebstoffschicht, wobei
der Metallformkörper einen porösen Strukturabschnitt besitzt, der in einem Oberflächenschichtteil ausgebildet ist;
die Klebstoffschicht in einem Teil ausgebildet ist, der den porösen Strukturabschnitt beinhaltet; und
ein Durchschnitt eines maximalen Höhenunterschieds in dem porösen Strukturabschnitt des Metallformkörpers, der gemäß dem unten beschriebenen Verfahren gemessen wird, in einem Bereich von 30 bis 200 µm liegt, und ein Bereich des maximalen Höhenunterschieds, der als Grundlage für die Berechnung des durchschnittlichen maximalen Höhenunterschieds verwendet wird, innerhalb von ±40% liegt, wenn der durchschnittliche maximale Höhenunterschied als Referenz definiert wird,
Verfahren zur Messung des durchschnittlichen maximalen Höhenunterschieds:
ein Längenbereich von 500 µm wird zufällig ausgewählt an maximal zehn Stellen in einem Oberflächenbereich von 20 mm × 20 mm (wenn weniger als 20 mm × 20 mm, dann der gesamte Oberflächenbereich) des porösen Strukturabschnitts des Metallformkörpers, der maximale Höhenunterschied der Poren einer porösen Struktur wird innerhalb des Längenbereichs von 500 µm an den maximal zehn Stellen aus einem REM-Querschnittsbild gemessen und ein Durchschnittswert der maximalen Höhenunterschiede wird bestimmt.

2. Der Verbundwerkstoff nach Anspruch 1, wobei der durchschnittliche maximale Höhenunterschied des porösen Strukturabschnitts des Metallformkörpers in einem Bereich von 40 bis 150 µm liegt und der Bereich des maximalen Höhenunterschieds, der als Grundlage für die Berechnung des durchschnittlichen maximalen Höhenunterschieds verwendet wird, innerhalb von ±35% liegt, wenn der durchschnittliche maximale Höhenunterschied als Referenz definiert ist.

3. Der Verbundwerkstoff nach Anspruch 1, wobei der durchschnittliche maximale Höhenunterschied des porösen Strukturabschnitts des Metallformkörpers in einem Bereich von 60 bis 125 µm liegt und der Bereich des maximalen Höhenunterschieds, der als Grundlage für die Berechnung des durchschnittlichen maximalen Höhenunterschieds verwendet wird, innerhalb von ±35% liegt, wenn der durchschnittliche maximale Höhenunterschied als Referenz definiert ist.

4. Der Verbundwerkstoff nach Anspruch 1, wobei der durchschnittliche maximale Höhenunterschied des porösen Strukturabschnitts des Metallformkörpers in einem Bereich von 70 bis 100 µm liegt und der Bereich des maximalen Höhenunterschieds, der als Grundlage für die Berechnung des durchschnittlichen maximalen Höhenunterschieds verwendet wird, innerhalb von ±35% liegt, wenn der durchschnittliche maximale Höhenunterschied als Referenz definiert ist.

5. Verbundwerkstoff, umfassend einen Metallformkörper und einen Nichtmetallformkörper, wobei der in einem der Ansprüche 1 bis 4 beschriebene Verbundwerkstoff und der Nichtmetallformkörper durch eine Klebstoffschicht des Verbundwerkstoffs integriert sind.

6. Verbundstoff, besitzend eine Klebstoffschicht auf einer Verbindungsfläche zwischen einem ersten Metallformkörper und einem zweiten Metallformkörper, wobei
der erste Metallformkörper einen ersten porösen Strukturabschnitt aufweist, der in einem Oberflächenschichtteil ausgebildet ist, und der zweite Metallformkörper einen zweiten porösen Strukturabschnitt aufweist, der in einem Oberflächenschichtteil ausgebildet ist;
die Klebstoffschicht in mindestens einem Teil, der den ersten porösen Strukturabschnitt beinhaltet, oder einem Teil, der die zweite poröse Struktur beinhaltet, ausgebildet ist; und
ein Durchschnitt eines maximalen Höhenunterschieds in dem porösen Strukturabschnitt des Metallformkörpers, der gemäß dem unten beschriebenen Verfahren gemessen wird, in einem Bereich von 30 bis 200 µm liegt, und ein Bereich des maximalen Höhenunterschieds, der als Grundlage für die Berechnung des durchschnittlichen maximalen Höhenunterschieds verwendet wird, innerhalb von ±40% liegt, wenn der durchschnittliche maximale Höhenunterschied als Referenz definiert wird,
Verfahren zur Messung des durchschnittlichen maximalen Höhenunterschieds:
ein Längenbereich von 500 µm wird zufällig ausgewählt an maximal zehn Stellen in einem Oberflächenbereich von 20 mm × 20 mm (wenn weniger als 20 mm × 20 mm, dann der gesamte Oberflächenbereich) des porösen Strukturabschnitts des Metallformkörpers, der maximale Höhenunterschied der Poren einer porösen Struktur wird innerhalb des Längenbereichs von 500 µm an den maximal zehn Stellen aus einem REM-Querschnittsbild gemessen und ein Durchschnittswert der maximalen Höhenunterschiede wird bestimmt.

7. Der Verbundwerkstoff nach Anspruch 6, wobei die durchschnittlichen maximalen Höhenunterschiede sowohl des ersten porösen Strukturabschnitts des ersten Metallformkörpers als auch des zweiten porösen Strukturabschnitts des zweiten Metallformkörpers in einem Bereich von 40 bis 150 µm liegen und der Bereich des maximalen Höhenunterschieds, der als Grundlage für die Berechnung der durchschnittlichen maximalen Höhenunterschiede verwendet wird, innerhalb von ±35% liegt, wenn der durchschnittliche maximale Höhenunterschied als Referenz definiert ist.

8. Der Verbundwerkstoff nach Anspruch 6, wobei die durchschnittlichen maximalen Höhenunterschiede sowohl des ersten porösen Strukturabschnitts des ersten Metallformkörpers als auch des zweiten porösen Strukturabschnitts des zweiten Metallformkörpers in einem Bereich von 60 bis 125 µm liegen und der Bereich des maximalen Höhenunterschieds, der als Grundlage für die Berechnung der durchschnittlichen maximalen Höhenunterschiede verwendet wird, innerhalb von ±35 % liegt, wenn der durchschnittliche maximale Höhenunterschied als Referenz definiert ist.

9. Der Verbundwerkstoff nach Anspruch 6, wobei die durchschnittlichen maximalen Höhenunterschiede sowohl des ersten porösen Strukturabschnitts des ersten Metallformkörpers als auch des zweiten porösen Strukturabschnitts des zweiten Metallformkörpers in einem Bereich von 70 bis 100 µm liegen und der Bereich des maximalen Höhenunterschieds, der als Grundlage für die Berechnung des durchschnittlichen maximalen Höhenunterschieds verwendet wird, innerhalb von ±35 % liegt, wenn der durchschnittliche maximale Höhenunterschied als Referenz definiert ist.

10. Verfahren zur Herstellung des in Anspruch 1 beschriebenen Verbundstoffs, wobei das Verfahren umfasst:
kontinuierliches Bestrahlen einer Oberfläche des Metallformkörpers mit Laserlicht bei einer Bestrahlungsrate von 2000 mm/s oder mehr unter Verwendung eines Dauerstrichlasers, um dadurch einen porösen Strukturabschnitt in einem Oberflächenschichtteil zu bilden, wobei die folgenden Anforderungen (a) bis (d) für die kontinuierliche Bestrahlung mit Laserlicht zur Bildung des porösen Strukturabschnitts erfüllt sind; und
Aufbringen eines Klebstoffs auf die Oberfläche des Metallformkörpers, um eine Klebstoffschicht auf einem Teil zu bilden, der den porösen Strukturabschnitt beinhaltet:
(a) Leistung ist zwischen 4 und 250 W,
(b) Fleckdurchmesser ist von 20 bis 80 µm,
(c) Energiedichte ist zwischen 1 und 100 MW/cm², und
(d) Anzahl an Wiederholungen ist zwischen 1 und 10.

11. Das Verfahren zur Herstellung des Verbundstoffs nach Anspruch 10, wobei die Anforderung (c) eine Energiedichte von 10 bis 80 MW/cm² ist und die Anforderung (d) eine Anzahl an Wiederholungen von 1 bis 8 ist.

12. Das Verfahren zur Herstellung des Verbundstoffs nach Anspruch 10, wobei die Anforderung (c) eine Energiedichte von 20 bis 50 MW/cm² ist und die Anforderung (d) eine Anzahl an Wiederholungen von 1 bis 8 ist.

13. Verfahren zur Herstellung des in Anspruch 5 beschriebenen Verbundwerkstoffs, wobei der Verbundwerkstoff einen Metallformkörper und einen Nichtmetallformkörper umfasst, und das Verfahren umfasst:
Herstellen des Verbundwerkstoffs gemäß dem in Anspruch 10 beschriebenen Herstellungsverfahren und anschließend
Verkleben der Klebstoffschicht des Verbundstoffs mit dem nichtmetallischen Formkörper.

14. Verfahren zur Herstellung des in Anspruch 6 beschriebenen Verbundstoffs, wobei das Verfahren umfasst:
kontinuierliches Bestrahlen einer Oberfläche des ersten Metallformkörpers und der Oberfläche des zweiten Metallformkörpers mit Laserlicht bei einer Bestrahlungsrate von 2000 mm/s oder mehr unter Verwendung eines Dauerstrichlasers, um dadurch einen ersten porösen Strukturabschnitt und einen zweiten porösen Strukturabschnitt auf jeweiligen Oberflächenschichtteilen zu bilden, wobei die folgenden Anforderungen (a) bis (d) für die kontinuierliche Bestrahlung mit Laserlicht erfüllt sind, um den ersten und zweiten porösen Strukturabschnitt zu bilden;
Aufbringen eines Klebstoffs auf mindestens eine der Oberflächen des ersten Metallformkörpers oder des ersten Metallformkörpers, um eine Klebstoffschicht auf mindestens einem Teil, der den ersten porösen Strukturabschnitt beinhaltet, oder einem Teil, der den zweiten porösen Strukturabschnitt beinhaltet, zu bilden; und
Verbinden des ersten Metallformkörpers und des zweiten Metallformkörpers durch die Klebstoffschicht;
(a) Leistung ist zwischen 4 und 250 W,
(b) Fleckdurchmesser ist zwischen 20 und 80 µm,
(c) Energiedichte ist zwischen 1 und 100 MW/cm², und
(d) Anzahl der Wiederholungen ist zwischen 1 und 10.

15. Das Verfahren zur Herstellung des Verbundstoffs nach Anspruch 14, wobei die Anforderung (c) eine Energiedichte von 10 bis 80 MW/cm² ist und die Anforderung (d) eine Anzahl an Wiederholungen von 1 bis 8 ist.

16. Das Verfahren zur Herstellung des Verbundstoffs nach Anspruch 14, wobei die Anforderung (c) eine Energiedichte von 20 bis 50 MW/cm² ist und die Anforderung (d) eine Anzahl an Wiederholungen von 1 bis 8 ist.

17. Das Verfahren zur Herstellung des Verbundwerkstoffs nach irgendeinem der Ansprüche 14 bis 16, wobei der Klebstoff ein wärmehärtender Klebstoff auf Harzbasis ist und das Verfahren umfasst: nach dem Verbinden des ersten Metallformkörpers und des zweiten Metallformkörpers durch eine Klebstoffschicht das Erhitzen und Härten des wärmehärtenden Klebstoffs auf Harzbasis der Klebstoffschicht.

## Revendications

1. Composite comprenant un corps moulé métallique et une couche adhésive, dans lequel
le corps moulé métallique présente une section de structure poreuse formée dans une partie de couche de surface ;
la couche adhésive est constituée dans une partie qui inclut la section de structure poreuse ; et
une moyenne d'une différence d'élévation maximale dans la section de structure poreuse du corps moulé métallique mesurée selon le procédé décrit ci-dessous s'inscrit dans une plage de 30 à 200 µm, et une plage de la différence d'élévation maximale utilisée comme base pour calculer la différence d'élévation maximale moyenne se situe à ±40 % lorsque la différence d'élévation maximale moyenne est définie comme une référence,
procédé pour mesurer la différence d'élévation maximale moyenne :
une plage de longueur de 500 µm est sélectionnée aléatoirement à un maximum de dix emplacements dans une zone de surface de 20 mm x 20 mm (si moins de 20 mm x 20 mm, alors la zone de surface totale) de la section de structure poreuse du corps moulé métallique, la différence d'élévation maximale de pores d'une structure poreuse au sein de la plage de longueur de 500 µm sur le maximum de dix emplacements est mesurée depuis une image SEM transversale, et une valeur moyenne des différences d'élévation maximale est déterminée.

2. Le composite selon la revendication 1, dans lequel la différence d'élévation maximale moyenne de la section de structure poreuse du corps moulé métallique s'inscrit dans une plage de 40 à 150 µm, et la plage de la différence d'élévation maximale utilisée comme base pour calculer la différence d'élévation maximale moyenne se situe à ±35 % lorsque la différence d'élévation maximale moyenne est définie comme une référence.

3. Le composite selon la revendication 1, dans lequel la différence d'élévation maximale moyenne de la section de structure poreuse du corps moulé métallique s'inscrit dans une plage de 60 à 125 µm, et la plage de la différence d'élévation maximale utilisée comme base pour calculer la différence d'élévation maximale moyenne se situe à ±35 % lorsque la différence d'élévation maximale moyenne est définie comme une référence.

4. Le composite selon la revendication 1, dans lequel la différence d'élévation maximale moyenne de la section de structure poreuse du corps moulé métallique s'inscrit dans une plage de 70 à 100 µm, et la plage de la différence d'élévation maximale utilisée comme base pour calculer la différence d'élévation maximale moyenne se situe à ±35 % lorsque la différence d'élévation maximale moyenne est définie en tant que référence.

5. Composite comprenant un corps moulé métallique et un corps moulé non métallique, dans lequel le composite décrit à l'une quelconque des revendications 1 à 4 et le corps moulé non métallique sont intégrés via une couche adhésive du composite.

6. Composite présentant une couche adhésive sur une surface liante entre un premier corps moulé métallique et un deuxième corps moulé métallique, dans lequel
le premier corps moulé métallique présente une première section de structure poreuse dans une partie de couche de surface, et le deuxième corps moulé métallique présente une deuxième section de structure poreuse constituée dans une partie de couche de surface ;
la couche adhésive est constituée dans au moins une d'une partie qui inclut la première section de structure poreuse ou une partie qui inclut la deuxième section de structure poreuse ; et
une moyenne d'une différence d'élévation maximale de chacune de la première section de structure poreuse du premier corps moulé métallique et de la deuxième section de structure poreuse du deuxième corps moulé métallique, mesurée selon le procédé décrit ci-dessous, s'inscrit dans une plage de 30 à 200 µm, et une plage de chaque différence d'élévation maximale utilisée comme base pour calculer la différence d'élévation maximale moyenne se situe à ±40 % lorsque la différence d'élévation maximale moyenne est définie comme une référence,
procédé pour mesurer la différence d'élévation maximale moyenne :
une plage de longueur de 500 µm est sélectionnée aléatoirement à un maximum de dix emplacements dans des zones de surface de 20 mm x 20 mm (si moins de 20 mm x 20 mm, alors la zone de surface totale) de la première section de structure poreuse et de la deuxième section de structure poreuse des corps moulés métalliques, la différence d'élévation maximale de pores d'une structure poreuse au sein de la plage de longueur de 500 µm sur le maximum de dix emplacements est mesurée depuis une image SEM transversale, et une valeur moyenne des différences d'élévation maximale est déterminée.

7. Le composite selon la revendication 6, dans lequel les différences d'élévation maximale moyenne de chacune de la première section de structure poreuse du premier corps moulé métallique et de la deuxième section de structure poreuse du deuxième corps moulé métallique s'inscrivent dans une plage de 40 à 150 µm, et la plage de la différence d'élévation maximale utilisée comme base pour calculer les différences d'élévation maximale moyenne se situe à ±35 % lorsque la différence d'élévation maximale moyenne est définie comme une référence.

8. Le composite selon la revendication 6, dans lequel les différences d'élévation maximale moyenne de chacune de la première section de structure poreuse du premier corps moulé métallique et de la deuxième section de structure poreuse du deuxième corps moulé métallique s'inscrivent dans une plage de 60 à 125 µm, et la plage de la différence d'élévation maximale utilisée comme base pour calculer les différences d'élévation maximale moyenne se situe à ±35 % lorsque la différence d'élévation maximale moyenne est définie comme une référence.

9. Le composite selon la revendication 6, dans lequel les différences d'élévation maximale moyenne de chacune de la première section de structure poreuse du premier corps moulé métallique et de la deuxième section de structure poreuse du deuxième corps moulé métallique s'inscrivent dans une plage de 70 à 100 µm, et la plage de la différence d'élévation maximale utilisée comme base pour calculer la différence d'élévation maximale moyenne se situe à ±35 % lorsque la différence d'élévation maximale moyenne est définie comme une référence.

10. Procédé pour fabriquer le composite décrit à la revendication 1, le procédé comprenant :
une irradiation continue d'une surface du corps moulé métallique avec une lumière laser à un taux d'irradiation de 2000 mm/sec ou supérieur en utilisant un laser à onde continue pour ainsi constituer une section de structure poreuse dans une partie de couche de surface, les exigences suivantes (a) à (d) étant satisfaites pour une irradiation continue avec une lumière laser pour constituer la section de structure poreuse ; et
une application d'un adhésif sur la surface de corps moulé métallique pour constituer une couche adhésive sur une partie qui inclut la section de structure poreuse :
(a) une sortie va de 4 à 250 W,
(b) un diamètre de point va de 20 à 80 µm,
(c) une densité énergétique va de 1 à 100 Mw/cm², et
(d) un nombre de répétitions va de 1 à 10.

11. Le procédé de fabrication du composite selon la revendication 10, dans lequel
l'exigence (c) est une densité énergétique de 10 à 80 Mw/cm², et l'exigence (d) est un nombre de répétitions de 1 à 8.

12. Le procédé de fabrication du composite selon la revendication 10, dans lequel l'exigence (c) est une densité énergétique de 20 à 50 Mw/cm², et l'exigence (d) est un nombre de répétitions de 1 à 8.

13. Procédé de fabrication du composite décrit à la revendication 5, ledit composite comprenant un corps moulé métallique et un corps moulé non métallique, et le procédé comprenant :
une fabrication du composite selon le procédé de fabrication décrit à la revendication 10, et puis subséquemment
une liaison de la couche adhésive du composite au corps moulé non métallique.

14. Procédé de fabrication du composite décrit à la revendication 6, le procédé comprenant :
une irradiation continue d'une surface du premier corps moulé métallique et de la surface du deuxième corps moulé métallique avec une lumière laser à un taux d'irradiation de 2000 mm/sec ou supérieur en utilisant un laser à onde continue pour ainsi constituer une première section de structure poreuse et une deuxième section de structure poreuse sur des parties de couche de surface respectives, les exigences suivantes (a) à (d) étant satisfaites pour une irradiation continue avec une lumière laser pour constituer les première et deuxième sections de structure poreuse ;
une application d'un adhésif sur au moins une de la première surface de corps moulé métallique ou la première surface de corps moulé métallique pour constituer une couche adhésive sur au moins une d'une partie qui inclut la première section de structure poreuse ou d'une partie qui inclut la deuxième section de structure poreuse ; et
une liaison du premier corps moulé métallique et du deuxième corps moulé métallique via la couche adhésive ;
(a) une sortie va de 4 à 250 W,
(b) un diamètre de point va de 20 à 80 µm,
(c) une densité énergétique va de 1 à 100 Mw/cm², et
(d) un nombre de répétitions va de 1 à 10.

15. Le procédé de fabrication du composite selon la revendication 14, dans lequel
l'exigence (c) est une densité énergétique de 10 à 80 Mw/cm², et l'exigence (d) est un nombre de répétitions de 1 à 8.

16. Le procédé de fabrication du composite selon la revendication 14, dans lequel
l'exigence (c) est une densité énergétique de 20 à 50 Mw/cm², et l'exigence (d) est un nombre de répétitions de 1 à 8.

17. Le procédé de fabrication du composite selon l'une quelconque des revendications 14 à 16, dans lequel l'adhésif est un adhésif à base de résine thermodurcissable, et le procédé comprend : après une liaison du premier corps moulé métallique et du deuxième corps moulé métallique via une couche adhésive, un chauffage et un durcissement de l'adhésif à base de résine thermodurcissable de la couche adhésive.
